**Europäisches Patentamt**

**European Patent Office**

**Office européen des brevets**

(19)

(11) **EP 1 227 062 A1**

(12) **EUROPEAN PATENT APPLICATION**

(43) Date of publication:
31.07.2002 Bulletin 2002/31

(51) Int Cl.$^7$: **C01B 3/26**, B01J 8/06

(21) Application number: 02000169.9

(22) Date of filing: 09.01.2002

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **26.01.2001 IT MI010138**<br><br>(71) Applicant: **LENTEK S.p.A.**<br>**20094 Corsico (IT)** | (72) Inventors:<br>• **Colombani, Piero**<br>**20100 Milan (IT)**<br>• **Cremonesi, Ernesto**<br>**24045 Fara Gera D'Adda (BG) (IT)**<br><br>(74) Representative: **Marietti, Giuseppe**<br>**Marietti, Gislon e Trupiano S.r.l.**<br>**Via Larga, 16**<br>**20122 Milano (IT)** |

(54) **Process and apparatus for the production of hydrogen from a gaseous hydrocarbon**

(57) Procedure and system for the production of hydrogen from methane or other gaseous hydrocarbon, in which the methane is decomposed at high temperature in the presence of a catalyst supplying hydrogen and carbon. The carbon which would pollute the catalyst is eliminated by means of a catalyst regeneration phase with steam, which generates a reaction gas that can be re-used as a source of energy (Fig. 1).

EP 1 227 062 A1

**Description**

This invention concerns a procedure and a system for the production of hydrogen by means of catalytic decomposition of methane or other gaseous hydrocarbon.

In particular the invention concerns a procedure and a system for the production of hydrogen by means of catalytic decomposition of methane and subsequent regeneration of the catalyst in one or more retorts. The catalyst used is porous, impregnated with nickel at 7%.

Hydrogen is used in large quantities to produce energy and heat and is the only fuel which, during combustion, produces non-polluting substances. Furthermore, it is used in the synthesis of organic compounds.

The best-known and most widely used chemical procedure for the industrial production of hydrogen is reforming of natural gaseous hydrocarbons (for example methane) or liquefied oil gases with steam, according to the following reaction.

$$C_nH_m + n\ H_2O \rightarrow (n+m/2)\ H_2 + n\ CO$$

For methane the above equation becomes:

$$CH_4 + H_2O \rightarrow CO + 3H_2\ (1060°C)$$

The reaction gas ($CO + 3H_2$) requires separation of the CO from the hydrogen, which is performed by reducing the temperature (preferably in a retort at a temperature between 300 °C and 600 °C), according to the following reaction:

$$2CO \rightarrow CO_2 + C$$

The carbon dioxide is then eliminated via molecular sieves or by means of other difficult, uncertain and costly techniques.

The carbon produced is deposited in the form of soot on the bottom of the retort and must be continuously eliminated by means of an auger or by periodically cleaning the retort.

The aim of the present invention, therefore, is to provide a procedure and a system for the production of hydrogen from methane which permits economic problem-free production as regards separation of the CO and hydrogen gases and also, possibly, without interruptions due to cleaning of the retort.

According to the present invention, this aim has been achieved by catalytic decomposition (cracking) of the methane and regeneration of the catalyst using one or more retorts, with re-use of the reaction gases produced by regeneration of the catalyst.

The procedure for the production of hydrogen according to the present invention comprises catalytic decomposition of natural gaseous hydrocarbons or liquefied oil gases at high temperature, according to the following reaction:

$$C_nH_m \rightarrow n\ C + m/2\ H_2$$

(for methane $CH_4 \rightarrow C + 2H_2$)
and regeneration of the catalyst with steam or water preferably at the same cracking temperature (and in a $CO_2$ stream), involving elimination of the carbon deposited on the catalyst according to the equation:

$$C + H_2O \rightarrow CO + H_2$$

(in a $CO_2$ stream $CO_2 + C \rightarrow 2\ CO$).

The catalyst regeneration phase may be also obtained with a $N_2/CO_2$ stream saturated with water (or steam).

Advantageously cracking of the methane occurs at a temperature between 1000°C and 1100°C, in a retort filled with a nickel based catalyst carried on a ceramic material support.

The hydrogen generated during cracking can be cooled and stored or used in fuel cells.

The carbon, in the form of very fine powder, is deposited on the ceramic support for the catalyst, gradually covering the ceramic support and thus reducing its effectiveness.

The activity of the catalyst is controlled during the procedure by detection and measurement of the non-cracked hydrocarbon at the retort outlet. When a maximum pre-set amount of hydrocarbon is recorded at the retort outlet, the retort switches to the regeneration phase.

In the catalyst regeneration phase, steam is introduced into the retort which reacts with the carbon deposited according to the following reaction:

$$C + H_2O \rightarrow CO + H_2$$

This reaction continues until all the carbon deposited on the support of catalyst during cracking is transformed into CO, or until the analyser detects the presence of CO in the gases emitted by the retort.

Subsequently the retort containing the regenerated catalyst returns to the hydrogen production phase.

The reaction gas ($CO + H_2$) of the catalyst regeneration phase is re-used without separation of the components as fuel, for example for heating the generator itself. In the procedure according to the present invention, preferably two retorts are used, kept at the reaction temperature in one single hot chamber provided with self-recovery burners powered by methane.

Each of the two retorts is provided with a flow meter for measuring the methane flow and a flow rate regulator for the steam.

The retorts operate alternatively generating hydrogen and regenerating the catalyst, thus permitting a continuous production of hydrogen. According to the operating mode of each retort, the valve supplying the methane (for the retort generating hydrogen) or the steam (for the retort regenerating the catalyst) is opened.

A heat exchanger is provided in the hot chamber used for generation of the steam necessary in the catalyst regeneration phase. This heat exchanger can be a coil, for example. In this way, the heat generated is used to heat the retorts in the hot chamber, thus obtaining additional energy saving.

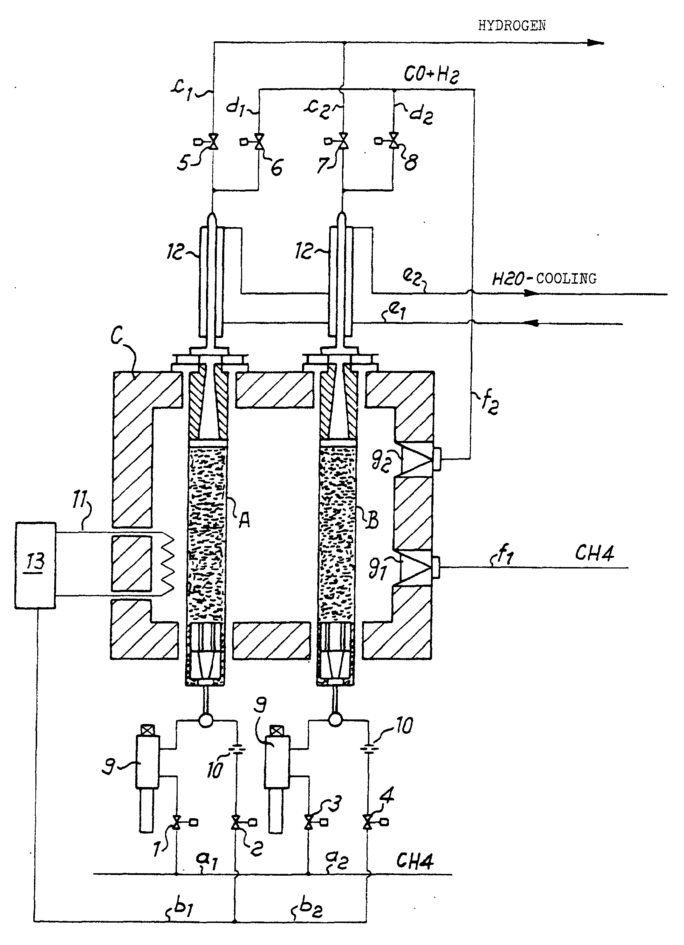

The two ends of the retorts are thermally insulated by means of a plug. A system diagram according to the present invention is shown in the only figure attached, provided purely as a non-restrictive example.

In the figure, A and B indicate two retorts filled with ceramic material which supports a catalyst at 7% nickel (but a catalyst at 4% - 5% nickel - minimum - has also been tested).

C indicates the hot chamber which encloses the two retorts A and B. The chamber is heated by combustible gas which enters via the supply elements $f_1$ and $f_2$, provided with burners $g_1$ and $g_2$.

The retorts A and B are supplied with a flow of a gaseous hydrocarbon (for example methane) via the pipe (supply element) $a_1$ or $a_2$, or with a flow of steam via pipe $b_1$ or $b_2$, according to their operating mode (generation of hydrogen or regeneration of the catalyst).

The flow of gaseous hydrocarbon (for example methane) entering the retort during the cracking phase is measured with a flow meter 9, while the quantity of steam entering for regeneration of the catalyst is regulated by means of a flow rate regulator 10.

Valve 1 or 3 connects the retort (A or B) to the flow of methane for the generation phase, while valve 2 or 4 connects the retort (A or B) to the steam flow for the catalyst regeneration phase.

The hydrocarbon and the steam enter the retort via a diffuser provided with holes.

The valve 5 or 7 controls outlet of the hydrogen generated via the pipe $c_1$ or $c_2$. The valve 6 or 8 controls outlet of the gas (CO + $H_2$), from the catalyst regeneration phase, via the pipe $d_1$ or $d_2$ for re-use, preferably in the procedure according to the present invention, as a source of energy.

12 indicates a heat exchanger for cooling the gases produced in the procedure according to the present invention. The cooling water that circulates in the heat exchanger 12 enters via the supply pipes $e_1$ and exits from the heat exchanger via the conveying pipes $e_2$.

In an alternative preferred embodiment of the system according to the present invention, said system is also provided with a heat exchanger 11 connected to the steam generator 13 used for regenerating the catalyst.

For illustrative purposes, some results obtained according to a pilot embodiment of the present invention are given below, with one single retort operating alternatively in the production and regeneration phase.

The production of hydrogen obtainable by using one single retort is 10 $m^3$/h with a methane supply of 5 $m^3$/h. Cracking temperature was maintained around 1000°C to increase process yield.

Hydrogen is produced for one hour; the system then switches to the regeneration phase which can be considered terminated when the CO analyser shows a value of below 1%.

Surprisingly, nickel based catalyst supported on a ceramic material didn't quickly degrade at a cracking temperature set above 1000°C. This means that a high yield of the process and a long life of the catalyst may be attained at the same time.

Therefore, even if any suitable catalyst may be used - for instance cubes of refractory material soaked in nickel - a nickel based catalyst carried on a ceramic support is preferred since it is easy - and consequently cheap - to obtain.

Nickel based catalyst supported on other inorganic materials was also successfully tested.

By using two retorts it is possible to produce hydrogen from gaseous hydrocarbon - such as methane - without interruption; while one is producing hydrogen, the other is - at least for a certain amount of time - in regeneration mode.

The present invention, furthermore, permits energy saving by reusing the gas (CO + $H_2$) from the catalyst regeneration phase as fuel for maintaining the temperature in the hot chamber.

As the skilled person can appreciate, hydrogen produced in the catalyst regeneration phase is not further separated from CO, since the high temperature cracking phase results in a high yield of the process (i. e. a great amount of hydrogen is produced at a cracking temperature greater or equal to 1000°C).

**Claims**

1. Procedure for the production of hydrogen from a gaseous hydrocarbon, **characterised in that** it comprises a hydrogen generation phase in which the hydrocarbon is decomposed in the presence of a catalyst at high temperature, according to the following reaction:

$$C_nH_m \rightarrow n\ C + m/2\ H_2$$

and a catalyst regeneration phase with steam or water with elimination of the carbon deposited on the catalyst, according to the reaction:

$$C + H_2O \rightarrow CO + H_2$$

in which the reaction gas ($CO + H_2$) from the catalyst regeneration phase is re-used as a source of energy.

2. Procedure according to claim 1, **characterised in that** the reaction gas from the catalyst regeneration phase is re-used as a source of energy in the process itself.

3. Procedure according to claim 1 or 2, **characterised in that** the two phases are performed, at least for a certain amount of time, parallel, in at least two retorts which operate alternatively generating hydrogen and regenerating the catalyst.

4. Procedure according to claim 1, 2 or 3, **characterised in that** the temperature of the cracking phase is between 1000 °C and 1100 °C.

5. Procedure according to claim 1, 2 or 3, **characterised in that** the retort(s) are filled or coated with catalyst supported on a ceramic material.

6. Procedure according to claim 5, **characterised in that** the catalyst is nickel-based.

7. Procedure according to claim 6, in which the catalyst contains nickel at 4% or more.

8. Procedure according to claim 1, 2 or 3, **characterised in that** the hydrogen obtained is cooled and stored or used in fuel cells.

9. Procedure according to claim 2, **characterised in that** the reaction gas from the regeneration phase is used for generating steam and/or for heating the retort(s).

10. System for the production of hydrogen from a gaseous hydrocarbon according to the procedure of claim 1 or 2, **characterised in that** it comprises:

    - a retort (A or B)
    - a hot chamber (C) enclosing the retort;
    - means for supplying the hydrocarbon ($a_1$, $a_2$) to the retort;
    - means for supplying the steam ($b_1$, $b_2$) to the retort;
    - means for supplying combustible gas ($f_1$) to a burner ($g_1$) of the hot chamber;
    - means for supplying the regeneration gas to an external heat generator and/or to a steam generator and/or to a burner ($g_2$) in the hot chamber.

11. System for the production of hydrogen from a gaseous hydrocarbon according to the procedure of claim 3, **characterised in that** it comprises:

    - two retorts (A and B);
    - a hot chamber (C) enclosing the retorts;
    - means for supplying hydrocarbon ($a_1$, $a_2$) alternatively to the retorts;
    - means for supplying steam alternatively ($b_1$, $b_2$) to the retorts;
    - means for supplying combustible gas ($f_1$) to a burner ($g_1$) of the hot chamber;
    - means for supplying the regeneration gas to an external heat generator and/or to a steam generator and/or to a burner ($g_2$) in the hot chamber.

12. System, according to claim 10 or 11, **characterised in that** the retort(s) use a catalyst supported on a ceramic material.

13. System according to claim 10 or 11, **characterised in that** the hot chamber (C) is provided with a heat exchanger (11) connected to a steam generator (13).

14. System according to claim 10 or 11, **characterised in that** it comprises, at the outlet of the retort(s), a heat exchanger (12) for cooling the gases produced.

**European Patent Office**

## EUROPEAN SEARCH REPORT

Application Number

EP 02 00 0169

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| Y | R. AIELLO ET AL.: "Hydrogen production via the direct cracking of methane over Ni/SiO2: catalyst deactivation and regeneration" APPLIED CATALYSIS A: GENERAL., vol. 192, 2000, pages 227-234, XP001023644 ELSEVIER SCIENCE, AMSTERDAM., NL ISSN: 0926-860X * the whole document * | 1-13 | C01B3/26 B01J8/06 |
| Y | POIRIER M G ET AL: "CATALYTIC DECOMPOSITION OF NATURAL GAS TO HYDROGEN FOR FUEL CELL APPLICATIONS" INTERNATIONAL JOURNAL OF HYDROGEN ENERGY, ELSEVIER SCIENCE PUBLISHERS B.V., BARKING, GB, vol. 22, no. 4, 1 April 1997 (1997-04-01), pages 429-433, XP000678376 ISSN: 0360-3199 * the whole document * | 1-13 | |
| X | WO 99 43608 A (NIAGARA MOHAWK POWER CORP) 2 September 1999 (1999-09-02) * the whole document * | 1,7 | TECHNICAL FIELDS SEARCHED (Int.Cl.7) C01B B01J |
| X | CHOUDHARY T V ET AL: "STEPWISE METHANE STEAM REFORMING: A ROUTE TO CO-FREE HYDROGEN" CATALYSIS LETTERS, BALTZER, SCIENTIFIC PUBL, BASEL, CH, vol. 59, no. 2/4, June 1999 (1999-06), pages 93-94, XP000835412 ISSN: 1011-372X * the whole document * | 1,7 | |
| | -/-- | | |

The present search report has been drawn up for all claims

| Place of search | Date of completion of the search | Examiner |
|---|---|---|
| THE HAGUE | 26 April 2002 | Van der Poel, W |

**European Patent Office**

## EUROPEAN SEARCH REPORT

Application Number

EP 02 00 0169

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 198426<br>Derwent Publications Ltd., London, GB;<br>Class E36, AN 1984-162882<br>XP002176039<br>& SU 243 580 A (AS UKR GAS INST),<br>15 January 1984 (1984-01-15)<br>* abstract * | 1,7 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 26 April 2002 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 00 0169

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2002

| Patent document cited in search report | Publication date | Patent family member(s) | | Publication date |
|---|---|---|---|---|
| WO 9943608 A | 02-09-1999 | AU | 2687399 A | 15-09-1999 |
| | | AU | 2773799 A | 15-09-1999 |
| | | CA | 2317395 A1 | 02-09-1999 |
| | | CN | 1291165 T | 11-04-2001 |
| | | EP | 1060123 A1 | 20-12-2000 |
| | | WO | 9943608 A1 | 02-09-1999 |
| | | WO | 9943609 A1 | 02-09-1999 |
| SU 243580 A | 15-01-1984 | SU | 243580 A1 | 15-01-1984 |